# EUROPEAN PATENT APPLICATION

(11) **EP 1 637 225 A1**
(43) Date of publication of application: **22.03.2006**
(21) Application number: 04745697.5
(22) Date of filing: 09.06.2004
(51) Int. Cl.: B01J 35/02, B01J 21/06, B01J 37/02, C03C 17/34, B32B 9/00, C23C 28/00

(54) **PHOTOCATALYST MEMBER**

(30) Priority: 09.06.2003 JP 2003164129
(71) Applicant: Nippon Sheet Glass Co., Ltd., Osaka-shi, Osaka 541-8559 (JP)
(72) Inventor: ANZAKI, Toshiaki c/o NIPPON SHEET GLASS CO., LTD., Osaka-shi, Osaka 541-8559 (JP); KIJIMA, Yoshifumi c/o NIPPON SHEET GLASS CO., LTD., Osaka-shi, Osaka 541-8559 (JP)
(74) Representative: Matthews, Derek Peter
(86) International application number: PCT/JP2004/008022
(87) International publication number: WO 2004/108283

(57) **Abstract**

A photocatalytic member which does not undergo heat treatment is provided. A photocatalyst layer is formed on the surface of a substrate through the intermediary of an undercoat layer. The main component of the undercoat layer is a crystalline zirconium compound, the photocatalyst layer is constituted of a crystalline phase, and the substrate has a low heat resistant element.

## Description

### BACKGROUND OF THE INVENTION

### Field of the Invention

The present invention relates to glass for use in construction, glass for use in vehicles, glass for use in displays, biochips, chemical chips, electronic devices, optical devices, glass fiber, glass flake and the like, in particular, relates to application fields in which photocatalysts are applied to these glass materials for the purpose of antifouling, hydrophilization, defogging, decomposition of organic materials and the like.

### Description of the Related Art

Photocatalysts such as anatase type titanium oxide are known to exert antifouling effect to decompose organic materials under ultraviolet light irradiation, antibacterial activity and hydrophilicity. Additionally, nowadays, photocatalysts exerting a catalytic function under visible light irradiation are attracting attention.

An invention has been disclosed in which a titanium oxide film is formed and subjected to heat treatment as means for improving the catalytic activity thereof at the time of the film formation or after the film formation in the air or in vacuum, so that the crystallinity and the like of the film are improved and thereby the photocatalytic activity is enhanced, thus the film being made to be worth actually using. (Patent Document 1)

### (Patent Document 1)

Japanese Patent No. 2517874 (pp.2 to 4).

However, application of such heat treatment can indeed improve the performance of a photocatalyst, but there is a problem such that the material used as the substrate and other functional films having been formed in the substrate suffer from deformation, oxidation, transformation into colloid and the like, all caused by heating, and consequently the shapes and optical properties thereof are deteriorated.

In particular, resin substrates, resin films, low heat resistant glasses and other materials, and a heat ray reflecting film (so-called low-E film) comprising generally a low heat resistant material such as silver tend to be affected by the heat treatment. Therefore, there have been problems particularly in the case where a photocatalyst layer for practical use is formed on a substrate comprising the above-described substances.

The present invention has been achieved in view of the above-described problems, and the object is to provide a photocatalytic member worth actually using even when the heat treatment is not applied.

### SUMMARY OF THE INVENTION

For the purpose of overcoming the above-described problems, the present inventors have diligently investigated means for obtaining a photocatalyst layer which is highly active even when no heat treatment is applied. Consequently, the present inventors have discovered that a highly active photocatalyst layer can be obtained by forming the photocatalyst layer on a particular undercoat layer even when the processes involved are consistently performed at low temperature. Specifically, an undercoat layer whose main component is a crystalline zirconium compound, in particular, a monoclinic zirconium compound is formed without heating on a substrate containing low heat resistant elements, and thereafter a photocatalyst layer whose main component is titanium oxide constituted of a crystalline phase is formed without heating.

For the above-described substrate, a low heat resistant glass, a low heat resistant metal, a resin substratum, a resin film, an organic-inorganic composite substratum and the like may be used, and additionally a substance having a non-heat-resistant thin film may also be used. The present invention can be applied to a substrate having a heat resistance temperature of 700°C or below, particularly, to a substrate having a heat resistance temperature of 500°C or below which enjoys the effect of the present invention, and furthermore to a substrate having a heat resistance temperature of 300°C or below for which the prior art can hardly form the highly active photocatalyst layer. In this regard, the heat resistance temperature means the upper limit temperature at which a substance is subjected to heat treatment for 30 minutes in the air so as to show no 5% or more variations in the optical transmittance, the reflectance and the shape.

Examples of the above-described non-heat-resistant thin film include a heat ray reflecting film in which silver is used, a heat ray reflecting film in which a laminated film of dielectric layer/silver layer/dielectric layer is used, and a heat ray reflecting film in which a laminated film of dielectric layer/silver layer/dielectric layer/silver layer/dielectric layer is used.

When the above-described laminated film is formed, a sacrifice layer made of Zn, Ti, Sn, Nb and the like may be provided immediately after the silver layer film-formation for the purpose of protecting the silver layer against the plasma generated in the subsequent steps.

The photocatalytic member according to the present invention may be provided with a configuration in which a peel preventing layer whose main components are oxide, oxide nitride and nitride containing at least one of silicon and tin is provided on the surface of the substrate. A photocatalyst layer is formed on the peel preventing layer through the intermediary of a crystalline undercoat layer, and substantially no dead layer (an amorphous layer in which no columnar particulate structure is found) is present between the undercoat layer and the photocatalyst layer. The thickness of the peel preventing layer is 2 nm to 200 nm, preferably 5 nm to 50 nm. When the thickness of the peel preventing layer is less than 2 nm, unpreferably the effect of controlling the generation of peeling and defects becomes insufficient. On the other hand, even when the thickness of the peel preventing layer is greater than 200 nm, since the effect of controlling the generation of peeling and defects is not largely improved, the upper limit of the thickness of the peel preventing layer is preferably 200 nm from the viewpoint of economy. When the thickness of the peel preventing layer is greater than 5 nm, more preferably the water blocking effect is increased. When the thickness exceeds 50 nm, since the stress of the amorphous film becomes great so as to cause peeling, the upper limit of the thickness of the peel preventing layer is more preferably 50 nm.

In another aspect of the photocatalytic member according to the present invention, a photocatalyst layer is formed on the surface of a substrate through the intermediary of a crystalline undercoat layer, the substrate is a glass substrate manufactured by a float glass method, and the undercoat layer is positioned on the face, comprising a non-heat-resistant thin film, of the glass substrate, or on the face opposite to this face.

The provision of the crystalline undercoat layer can improve the crystallinity of the photocatalyst layer and hence the surface of the photocatalyst layer can be rapidly made superhydrophilic. Also, the provision of the peel preventing layer between the substrate and the crystalline undercoat layer can control the generation of peeling of the undercoat layer from the substrate and the generation of defects.

The peel preventing layer blocks chlorine ions and water coming from the surface, prevents these ions and molecules from reaching the glass substrate, and thereby can control peeling of the undercoat layer from the substrate. It is also possible to prevent discoloration and defects caused by the reaction of carbonic acid gas and water from the atmosphere with alkali components in the glass substrate.

The thickness of the photocatalyst layer is preferably 1 nm to 1,000 nm. When the thickness is less than 1 nm, the continuity of the film becomes poor, resulting in insufficient photocatalytic activity. When the thickness is greater than 1,000 nm, since the exciting light (ultraviolet light) does not reach the deep interior of the photocatalyst film, such a film having an increased thickness does not enhance photocatalytic activity. In particular, when the thickness is in the range of 1 nm to 500 nm, the effect of the undercoat layer can be observed as a remarkable one. In other words, according to the comparison based on the same film thickness, the case with the undercoat layer showed greater photocatalytic activity than the case without the undercoat layer. Consequently, the more preferable range is 1 nm to 500 nm.

Even when the thickness of the photocatalyst layer is made as thin as 1 nm to 1000 nm, if the particles which constitute the photocatalyst layer are formed continuously from the interface between the undercoat layer and the photocatalyst layer to the surface of the photocatalyst layer, the crystal growth is developed and thereby the photocatalytic activity can sufficiently be exerted.

The width of the particles which constitute the photocatalyst layer, in the direction parallel to the substrate, is preferably 5 nm or more. This is because if the particle width is less than 5 nm, the crystallinity is low and the photocatalytic activity becomes insufficient.

For the undercoat layer, in addition to the monoclinic zirconium oxide, the following materials are preferably used: a zirconium oxide to which a small amount of nitrogen is added, zirconium oxynitride, and a zirconium oxide to which niobium (Nb) of 0.1 to 10 atm% is added. In particular, in cases where a target to which niobium is added is used for sputtering, it is possible to prevent arcing from being generated, and also prevent undesirable power control which is required due to generation of arcing, and accompanying degradation of the film-formation rate.

As for the photocatalyst layer, tetragonal titanium oxide is preferably used; in particular, anatase type titanium oxide is preferably used because the photocatalytic activity thereof is high. In addition to anatase type titanium oxide, rutile type titanium oxide, a composite oxide of titanium and tin, a mixed oxide of titanium and tin, titanium oxide to which a small amount of nitrogen is added, and titanium oxynitride.

The thickness of the undercoat layer is preferably 1 nm or more and 500 nm or less. The thickness less than 1 nm is not preferable because the undercoat layer having such a thickness is not continuous so as to become island-like, which results in decreased durability. On the other hand, when the thickness is greater than 500 nm, since the effect of the thickness on the photocatalyst layer becomes substantially the same, making the thickness great is economically useless and is not preferable. The more preferable thickness of the undercoat layer is 2 to 50 nm. When the thickness is less than 2 nm, the crystallinity of the undercoat layer becomes low, and hence the effect of promoting crystal growth of the photocatalyst layer becomes small. When the thickness is greater than 50 nm, unpreferably variations of the optical properties (color tone, reflectance) due to the thickness change become large.

The methods for forming the non-heat-resistant thin film, the undercoat layer, and the photocatalyst layer may be any of liquid phase methods (a sol-gel method, a liquid phase precipitation method, a spray method and a pyrosol method), vapor phase methods (a sputtering method, a vacuum deposition method and a CVD method) and the like. These methods have the effect of improving the crystallinity of the photocatalyst layer with the aid of the undercoat layer; however, vapor phase methods such as a sputtering method, a deposition method and the like are more suitable because they involve crystal growth and show a particularly significant effect in the present invention.

Formation of a hydrophilic thin film on the photocatalyst layer allows the hydrophilic effect to be increased. The hydrophilic thin film is preferably made of at least one oxide selected from the group consisting of silicon oxide, zirconium oxide, germanium oxide and aluminum oxide. Among these oxides, silicon oxide is more preferably used from the viewpoint of a hydrophilicity improvement effect and durability. The hydrophilic thin film is preferably porous. This is because being porous enhances the water retaining effect, and accordingly enhances the maintenance performance of the hydrophilicity. Moreover, being porous allows active species such as active oxygen generated on the surface of the photocatalyst layer by irradiation of ultraviolet light to reach the surface of the article through the pores, so that the photocatalytic activity of the photocatalyst layer is not significantly damaged.

As the method for forming the porous hydrophilic thin film, liquid phase methods (a sol-gel method, a liquid phase precipitation method, and a spray method) and vapor phase methods (a sputtering method, a vacuum deposition method and a CVD method) are used. Application of the well-known sol-gel method allows a porous thin film to easily be prepared, and addition of an organic polymer and higher alcohol into the raw material solution of a sol gel method allows a porous thin film to more easily be prepared. In vapor phase methods such as a sputtering method, by adjusting the film-formation conditions so as to increase dangling bonds in the oxide including increasing the gas pressure and reducing the oxygen amount in the gas at the time of sputtering, it is possible to prepare a porous thin film.

The thickness of the hydrophilic thin film is preferably 1 nm or more and 30 nm or less. When the thickness is less than 1 nm, the hydrophilicity is insufficient. When the thickness is greater than 30 nm, the photocatalytic activity of the photocatalyst layer is damaged. The more preferable range of the thickness is 1 nm or more and 20 nm or less. With this range, the maintenance performance of the hydrophilicity is high in a case where light is not irradiated.

When the undercoat layer made of a zirconium compound is formed particularly in a reduced pressure atmosphere by means of a deposition method, a sputtering method or the like, it becomes a crystalline film including a monoclinic film even at low temperature. The crystalline undercoat layer serves as a seed layer for growth of a film of a photocatalyst including titanium oxide which is formed on the undercoat layer, so that a highly crystalline photocatalyst layer can be easily obtained even without heating. When titanium oxide is used for the photocatalyst layer, the photocatalyst layer tends to grow as an anatase type crystal and a very highly active photocatalyst layer can be obtained without heating according to this method.

As described above, according to the present invention, a photocatalyst layer having high photocatalytic activity can be formed without heating on a substrate or a thin film having low heat resistance, which makes it possible to combine with a component having low heat resistance. Also, the present invention can be applied to film formation on a large size substrate such as glass in which uniform heating and control of cracks at the time of heating and cooling are difficult.

### BRIEF DESCRIPTION OF THE DRAWINGS

FIG. 1 is a schematic sectional view of a specific example of the photocatalytic member involved in the present invention;
FIG. 2 is a schematic sectional view of a specific example of the photocatalytic member involved in the present invention; and
FIG. 3 is a schematic sectional view of a specific example of the photocatalytic member involved in the present invention.

### DETAILED DESCRIPTION OF THE PREFERRED EMBODIMENTS

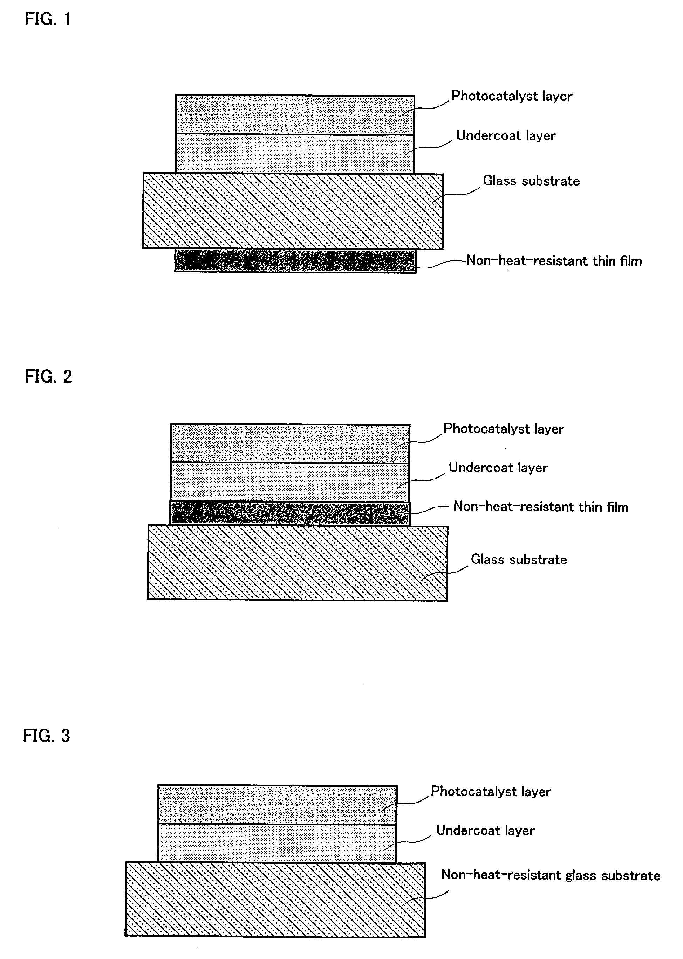

Description will be made below of an embodiment of the present invention referring to the accompanying drawings. FIGS. 1 to 3 are schematic sectional views each showing a specific example of the photocatalytic member according to the present invention. In the specific example shown in FIG. 1, a monoclinic ZrO₂ layer as an undercoat layer is formed on the surface opposite to the surface of a glass plate as a substrate on which a non-heat-resistant thin film is formed, and a crystalline TiO₂ layer is formed thereon as a photocatalyst layer. Although not shown in the figure, a peel preventing layer may be formed between the substrate and the undercoat layer, and a porous SiO₂ layer may be formed on the crystalline TiO₂ layer for the purpose of enhancing the hydrophilicity.

In the specific example shown in FIG. 2, on the surface of a glass plate as a substrate, a non-heat-resistant thin film, a monoclinic ZrO₂ layer as an undercoat layer and a crystalline TiO₂ layer as a photocatalyst layer are formed in this order. Although not shown in the figure, a peel preventing layer may be formed between the substrate and the undercoat layer, and a porous SiO₂ layer may be formed on the crystalline TiO₂ layer for the purpose of enhancing the hydrophilicity.

In the specific example shown in FIG. 3, a monoclinic ZrO₂ layer as an undercoat layer is formed on the surface of a non-heat-resistant substrate, and a crystalline TiO₂ layer is formed as a photocatalyst layer on the monoclinic ZrO₂ layer. Although not shown in the figure, a peel preventing layer may be formed between the substrate and the undercoat layer, and a porous SiO₂ layer may be formed on the crystalline TiO₂ layer for the purpose of enhancing the hydrophilicity.

The above-described non-heat-resistant thin film, ZrO₂ layer, TiO₂ layer and SiO₂ layer are formed by means of a sputtering method. As the non-heat-resistant thin film, a multilayer film such as a film of dielectric layer/silver layer/dielectric layer/silver layer/dielectric layer can be cited as an example.

Table 1 shows the configurations of the non-heat-resistant thin film, undercoat layer, photocatalyst layer and peel preventing layer, and the evaluation results of the photocatalytic properties and the optical properties in Examples 1 to 4. Table 2 shows the heat treatment, the method for forming the photocatalyst layer and peel preventing layer, and the evaluation results of the photocatalytic properties and the optical properties in Comparative Examples 1 to 6.

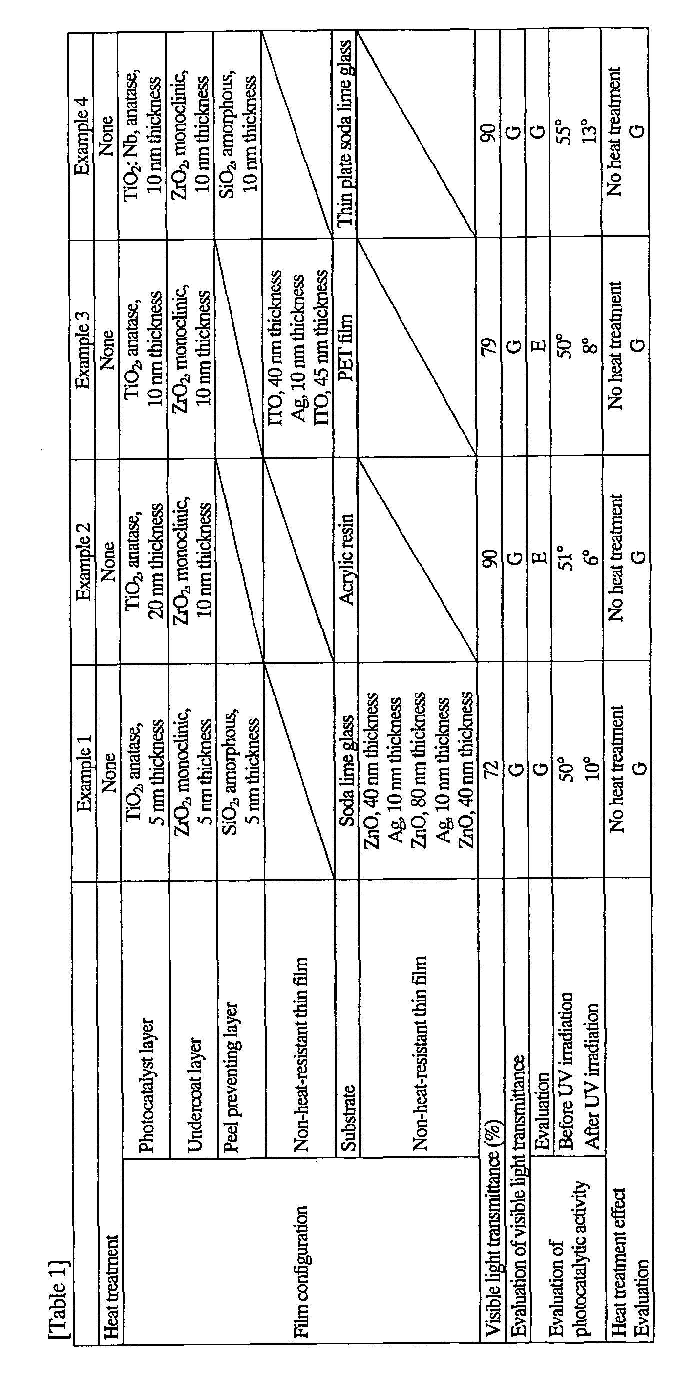

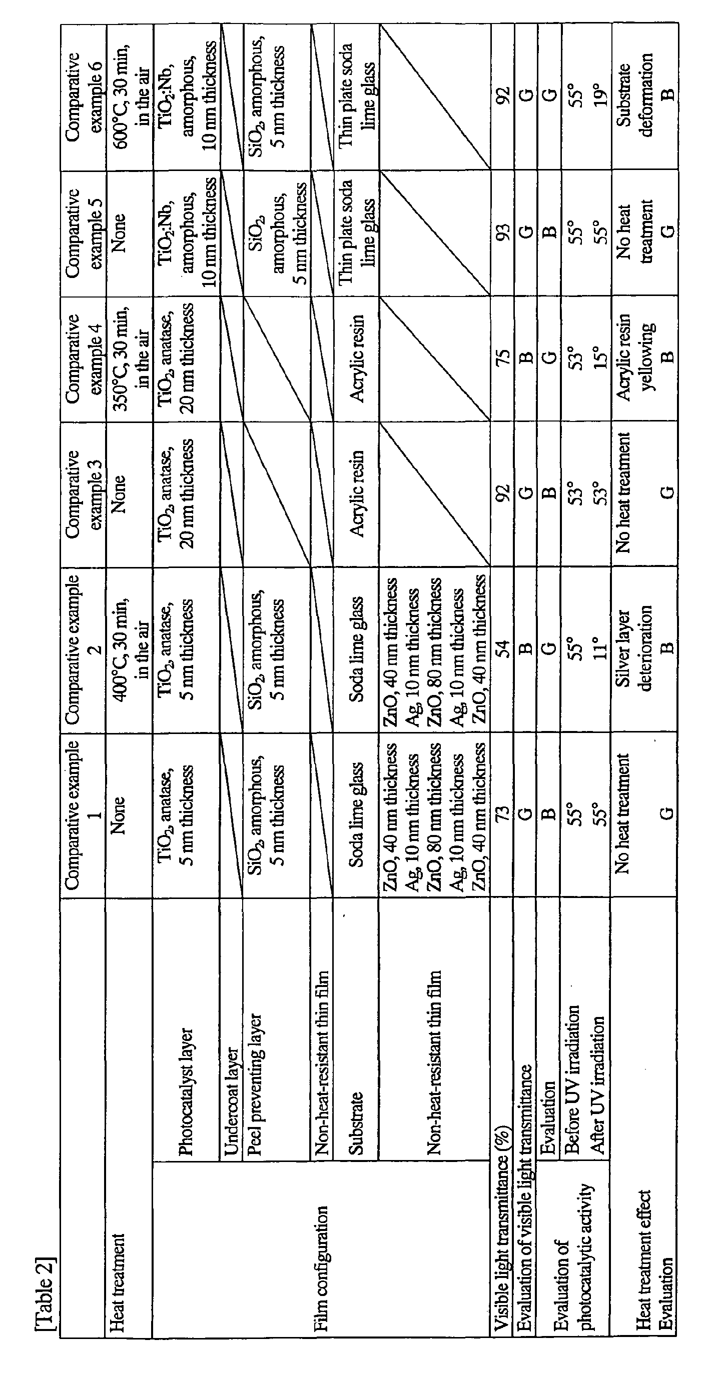

### (Example 1)

By means of an inline type magnetron sputtering apparatus, on a 1 m long x 1 m wide x 3 mm thick soda lime glass substrate, a zinc oxide layer and a silver layer were laminated alternately so as to form a multilayer film having a configuration of the substrate/zinc oxide layer (40 nm)/silver layer (10 nm)/zinc oxide layer (80 nm)/silver layer (10 nm)/zinc oxide layer (40 nm). The zinc oxide layers were formed by use of a target of zinc oxide to which aluminum was added, and the silver layers were formed by use of a silver target, both in the atmosphere of reduced pressure argon without heating. The multilayer film of zinc oxide and silver has a heat ray reflecting function but has low heat resistance, and the above-defined heat resistance temperature thereof is 150°C. When the film is exposed to a temperature exceeding this heat resistance temperature, cohesion and blackening of the silver occur.

In succession to the above-described step, in a chamber (the atmosphere of a mixture of equal amounts of argon and oxygen, 0.93 Pa) which is in a later stage of the same inline type magnetron sputtering apparatus, a silicon oxide layer (5 nm), a monoclinic zirconium oxide layer (5 nm) and an anatase type titanium oxide layer (5 nm) were formed in this order on the face of the soda lime glass substrate opposite to the face on which the above-described multilayer film (non-heat-resistant thin film) of zinc oxide and silver was formed. The films were formed by means of an unheated reactive sputtering method using a silicon target, a zirconium target and a titanium target, respectively.

With this, photocatalytic glass having non-heat-resistant function was obtained in which a heat ray reflecting film comprising a multilayer film of zinc oxide and silver was formed on a surface of the soda lime glass substrate and a photocatalyst layer was formed on the opposite surface. In this instance, no heating step was conducted, and thereby no cohesion of the silver occurred, so that an article having high visible light transmittance was obtained. The results of the visible light transmittance measurement are shown in Table 1. The visible light transmittance was measured by use of a D65 light source according to "Testing method for transmittance, reflectance and emissivity of plate glasses and evaluation of solar heat gain coefficient" described in JIS R3106.

The photocatalytic activity of the photocatalyst layer was evaluated on the basis of the hydrophilization performance index. After the photocatalyst layer was formed, the multilayer article was stored in the dark without light for 14 days to let hydrocarbon in the air deposited on the surface thereof and thereby lower the hydrophilicity of the surface. Thereafter, with the aid of black light, the surface of the titanium oxide layer was irradiated with ultraviolet rays having an intensity of 1 mW/cm² for 1 hour, and the following evaluation was conducted with respect to the contact angle of water drops after the irradiation.

| Contact angle of water drop (°) | Photocatalytic activity evaluation |
|---|---|
| 0 to 9 | E (Excellent) |
| 10 to 19 | G (Good) |
| 20 to 29 | M (Mean) |
| 30 or more | B (Bad) |

The photocatalytic activity of the titanium oxide layer of the above-described article was evaluated and showed a good result.

With the surface of the soda lime glass substrate on which the heat ray reflecting film was formed being faced to the inside, this soda lime glass substrate and another sheet of soda lime glass were subjected to multiple glass processing treatment. As a result, a heat ray reflecting type multiple glass with an antifouling function was obtained in which a heat ray reflecting film was on the inside face of an outdoor glass sheet and a photocatalytic antifouling film was on the outside face of the outdoor glass sheet.

### (Example 2)

By means of an inline type magnetron sputtering apparatus, on a 1 m long x 1 m wide × 3 mm thick acrylic resin substrate, a monoclinic zirconium oxide layer (10 nm) and an anatase type titanium oxide layer (20 nm) were formed. The films were formed by means of an unheated reactive sputtering method in the atmosphere of a mixture of equal amounts of argon and oxygen (0.93 Pa) by use of a zirconium target and a titanium target, respectively.

The acrylic resin has low heat resistance, and the above-defined heat resistance temperature thereof is 230°C. When it is exposed to a temperature higher than this temperature, it turns yellow. In the above-described film formation step of the photocatalyst layer, no heating step was conducted, so that the acrylic resin substrate did not turn yellow and the optical properties of the acrylic resin did not show any change between before and after the film formation.

This non-heat-resistant photocatalytic glass substrate can be used as a substrate for use in display.

### (Example 3)

By means of an inline type magnetron sputtering apparatus, on a 1 m long x 1 m wide × 3 mm thick polyethylene terephthalate (PET) film substrate, an indium tin oxide (ITO) layer and a silver layer were laminated alternately to form a multilayer film having a configuration of the substrate/ITO layer (45 nm)/silver layer (10 nm)/ITO layer (40 nm). The ITO layer was formed by use of an ITO target and the silver layer was formed by use of a silver target, both in the atmosphere of reduced pressure argon without heating. The multilayer film of ITO and silver has a heat ray reflecting function but has low heat resistance, and the above-defined heat resistance temperature thereof is 150°C. When the film is exposed to a temperature exceeding the heat resistance temperature, cohesion and blackening of the silver occur. Additionally, the PET film has a heat resistance temperature of 180°C. Therefore, when the temperature exceeds this heat resistance temperature, softening and deformation becomes conspicuous.

In succession to the above-described step, in a chamber (the atmosphere of a mixture of equal amounts of argon and oxygen, 0.93 Pa) which is in a later of the same inline type magnetron sputtering apparatus, a monoclinic zirconium oxide layer (10 nm) and an anatase type titanium oxide layer (10 nm) were formed in this order on the multilayer film of ITO and silver. The films were formed by means of an unheated reactive sputtering method using a zirconium target and a titanium target, respectively. The titanium oxide layer of the obtained article showed very high photocatalytic activity.

The PET film substrate and the silver layer contain elements having low heat resistance, but in the above-described film formation step, no heating step was conducted, and hence no deterioration was found in the substrate and the silver layer, so that an article excellent in optical properties was obtained.

This photocatalytic substrate can be used as an antifouling film having an electromagnetic shielding function.

### (Example 4)

By means of an inline type magnetron sputtering apparatus, on a thin plate soda lime glass substrate of 1 m long × 1 m wide × 1 mm thick, a silicon oxide layer (10 nm), a monoclinic zirconium oxide layer (10 nm), and a niobium doped anatase type titanium oxide layer (10 nm) were formed. The silicon oxide layer and monoclinic zirconium oxide layer were formed by means of an unheated reactive sputtering method in the atmosphere of a mixture of equal amounts of argon and oxygen (0.93 Pa) by use of a silicon target and a zirconium target, respectively. The Nb doped anatase type titanium oxide layer was formed by means of an unheated sputtering method in the atmosphere of argon (0.93 Pa) by use of a titanium-niobium oxide target. The niobium doped titanium oxide layer in the obtained article showed good photocatalytic activity.

The thin plate soda lime glass substrate of 1 mm thick tends to be deformed when exposed to high temperature, and the above-defined heat resistance temperature thereof is 500°C. In the above film formation steps, no heating step was conductd, so that the substrate did not show any deformation between before and after the film formation.

This photocatalytic substrate can be used as a biochemical chip.

### (Comparative Example 1)

The films were formed under the same conditions as those in Example 1 except that the zirconium oxide layer was not formed. The obtained article is excellent such that the visible light transmittance thereof is as high as 73%, but the photocatalytic activity of the titanium oxide layer was evaluated to be "B (Bad)."

### (Comparative Example 2)

The article of Comparative Example 1 was heated in the air at 400°C for 30 minutes to subject the titanium oxide film to heat treatment. After the heat treatment, the photocatalytic activity was evaluated to be "G (good)," but cohesion of the silver in the heat ray reflecting film occurred so as to lower the visible light transmittance (from 73% before heating to 54% after heating).

### (Comparative Example 3)

The films were formed under the same conditions as those in Example 2 except that the zirconium oxide layer was not formed. The photocatalytic activity of the titanium oxide layer of the obtained article was evaluated to be "B (Bad)."

### (Comparative Example 4)

The article of Comparative Example 3 was heated in the air at 350°C for 30 minutes to subject the titanium oxide film to heat treatment. After the heat treatment, the photocatalytic activity was evaluated to be "G (good)," but the acrylic resin of the substrate turned yellow so as to lower the visible light transmittance (from 92% before heating to 75% after heating).

### (Comparative Example 5)

The films were formed under the same conditions as those in Example 4 except that the zirconium oxide layer was not formed. The photocatalytic activity of the titanium oxide layer of the obtained article was evaluated to be "B (Bad)."

### (Comparative Example 6)

The article of Comparative Example 5 was heated in the air at 600°C for 30 minutes to subject the titanium oxide film to heat treatment. After the heat treatment, the photocatalytic activity was evaluated to be "G (good)," but the substrate was deformed significantly, and was found to be inappropriate as a commercial article.

As described above, according to the present invention, a photocatalyst layer is formed on the surface of a substrate through the intermediary of an undercoat layer whose main component is a crystalline zirconium compound, and the undercoat layer enhances the crystallinity of the photocatalyst layer and improves the photocatalytic activity, so that no heat treatment after the photocatalyst layer formation becomes necessary. Accordingly, high photocatalytic activity and a high antifouling property can be imparted to all members for use in glass panes for construction, glass plates for displays, glass substrates for DNA analysis, portable information devices, sanitary equipments, medical care equipments, electronic devices, biomedical test chips, materials for hydrogen/oxygen generation devices and the like, in particular, to low heat resistant materials. As a result, combinations of non-heat-resistant materials with photocatalyst layers having high photocatalytic activity become possible, those combinations having hitherto been hardly possible.

Also, the present invention can be applied to film formation on a large size substrate such as glass in which uniform heating and control of cracks at the time of heating and cooling are difficult.

## Claims

1. A photocatalytic member comprising:
a substrate;
an undercoat layer formed on a surface of said substrate; and
a photocatalyst layer formed on a surface of said undercoat layer,
wherein the main component of said undercoat layer is a crystalline zirconium compound, said photocatalyst layer is constituted of a crystalline phase, and said substrate has a low heat resistant element.

2. The photocatalytic member according to claim 1, wherein said crystalline zirconium compound includes monoclinic zirconium oxide crystals.

3. The photocatalytic member according to claim 1 or 2, wherein said substrate is comprised of low heat resistant glass.

4. The photocatalytic member according to claim 1 or 2, wherein said substrate is a resin substrate.

5. The photocatalytic member according to claim 1 or 2, wherein said substrate is a resin film.

6. The photocatalytic member according to claim 1 or 2, wherein said substrate is an organic-inorganic composite substrate.

7. The photocatalytic member according to claim 1 or 2, wherein said substrate is comprised of low heat resistant metal.

8. The photocatalytic member according to any one of claims 1 to 7, wherein said substrate includes a non-heat-resistant thin film.

9. The photocatalytic member according to claim 8, wherein said non-heat-resistant thin film is a heat ray reflecting film in which silver is used.

10. The photocatalytic member according to claim 9, wherein said non-heat-resistant thin film is a heat ray reflecting film in which a laminated film of dielectric layer/silver layer/dielectric layer is used.

11. The photocatalytic member according to claim 9, wherein said non-heat-resistant thin film is a heat ray reflecting film in which a laminated film of dielectric layer/silver layer/dielectric layer/silver layer/dielectric layer is used.

12. The photocatalytic member according to any one of claims 1 to 11, wherein said substrate has a heat resistance temperature of 700°C or below.

13. The photocatalytic member according to any one of claims 1 to 11, wherein said substrate has a heat resistance temperature of 500°C or below.

14. The photocatalytic member according to any one of claims 1 to 13, wherein the main component of said photocatalyst layer is a titanium compound.

15. The photocatalytic member according to claim 14, wherein said titanium compound is tetragonal titanium oxide.

16. The photocatalytic member according to claim 14 or 15, wherein said titanium compound is anatase type titanium oxide.

17. The photocatalytic member according to any one of claims 1 to 16, wherein said non-heat-resistant thin film, said undercoat layer and said photocatalyst layer are formed by a vapor phase method.

18. The photocatalytic member according to claim 17, wherein said vapor phase method is a sputtering method.
